(19)

Europäisches Patentamt

European Patent Office

Office européen des brevets

(11) **EP 4 207 001 A1**

(12) **EUROPEAN PATENT APPLICATION**

(43) Date of publication:
**05.07.2023 Bulletin 2023/27**

(51) International Patent Classification (IPC):
**G06N 3/12** *(2023.01)*    **G06N 5/00** *(2023.01)*

(21) Application number: **21218077.2**

(52) Cooperative Patent Classification (CPC):
**G06N 3/123; G06N 5/01**

(22) Date of filing: **29.12.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **DNA 2 Ascendancy AB**
**181 30 Lidingö (SE)**

(72) Inventors:
• **King, Ross D,**
**Borth SY24 5ND (GB)**

• **Korovin, Konstantin**
**Huddersfield HD4 6LA (GB)**

(74) Representative: **AWA Sweden AB**
**Box 45086**
**104 30 Stockholm (SE)**

Remarks:
The complete document including Reference Table(s) and the Sequence Listing(s) can be downloaded from the EPO website

(54) **METHOD FOR MOLECULAR COMPUTING**

(57)    There is disclosed herein a method for operating a molecular computer to solve an NP-complete mathematical problem (204), comprising obtaining a molecular sequence (216) encoding an N-SAT problem (206) having a plurality of clauses formed from a plurality of literals in conjunctive normal form, obtaining replicas of the molecular sequence (216), for each pair (217) of replicas, editing the literal-encoding sequences having a variable symbol identifying a particular variable of the N-SAT problem (206) such that, for one replica (216A, 216C) of the pair (217A, 217B), a truth symbol is assigned a truth value representing true and, for the other replica (216B, 216D) of the pair (217A, 217B), the truth symbol is assigned a truth value representing false, obtaining, from said editing, a pool (222) of potential-solution sequences (216A", 216B", 216C", 216D"), each potential-solution sequence (216A", 216B", 216C", 216D") encoding a potential solution to the N-SAT problem (206), and identifying, from the pool (222) of potential-solution sequences (216A", 216B", 216C", 216D"), a solution sequence (224, 216B", 216C"), based on a determination that each encoded clause of a potential-solution sequence (216B", 216C") contains at least one true-evaluating literal-encoding sequence, the solution sequence (216B", 216C") encoding a solution to the N-SAT problem (206).

Fig. 2

**Description**

**TECHNICAL FIELD**

The present disclosure relates to a method and apparatus for molecular computing. More particularly, the present disclosure relates to a method and apparatus for solving an arbitrary NP-complete mathematical problem using a molecular computer.

**BACKGROUND**

A significant concept in complexity theory is the class of non-deterministic polynomial time (NP) problems. Informally, NP problems are the class of decision problem where the solution can be verified in polynomial, or 'P' time, i.e. membership propositions/solutions have efficiently verifiable proofs (e.g., as opposed to exponential time).

If a problem is in NP, and all other NP problems are polynomial-time reducible to it, then the problem is referred to as being 'NP-complete'.

NP-complete problems are widely considered the most important of all computational problems, as a vast number of practical problems can be translated into the following types of NP-complete problem: sub-graph isomorphism, Boolean satisfiability problems, knapsack problems, traveling salesman problems, clique problems, graph coloring problems, etc.

These mathematical problems are relevant to commercially important technical problems such as logistics, airline flight schedules, the scheduling of cloud computing jobs, the placement of taxis/ambulances to wait on customers/accidents, the packing of diverse shaped objects into a limited space, cryptography, verification of software and hardware, and so on.

An arbitrary NP problem can be translated by, for example, an electronic computer into data representing a corresponding abstract N-SAT problem (a type of Boolean satisfiability problem). This may be done in P-time using well-known methods.

By efficiently solving N-SAT problems, a polynomial-time reduction can be used to solve other NP problems. Put concisely, any arbitrary NP-complete mathematical problem can be solved based on the solution of a corresponding N-SAT problem.

N-SAT problems can be described in a conjunctive normal form (CNF) propositional formula. A CNF formula is a conjunction (logical 'AND') of clauses. A clause is a disjunction (logical 'OR') of literals. A literal is either a variable or a negation of a variable.

An example of a CNF formula is presented below:

$$(X_0 \lor \neg X_1 \lor \neg X_2) \land (\neg X_1 \lor X_3 \lor \neg X_4)$$

where $(X_0 \lor \neg X_1 \lor \neg X_2)$ is a clause involving the variables $X_0$, $X_1$, and $X_2$, $\lor$ is a disjunction (a logical 'OR'), and $\neg$ is a negation (a logical 'NOT') such that $\neg X_1$ means 'NOT $X_1$' and thus $X_0 \lor \neg X_1 \lor \neg X_2$ means '$X_0$ OR NOT $X_1$ OR NOT $X_2$'. This clause would evaluate as TRUE if $X_0$ were TRUE, or if either of $X_1$ and $X_2$ were FALSE.

In the above CNF formula, the clause $(X_0 \lor \neg X_1 \lor \neg X_2)$ is conjunct with the clause $(\neg X_1 \lor X_3 \lor \neg X_4)$, as represented by the conjunction $\land$ (a logical 'AND'). Therefore, for the overall CNF formula above to evaluate as TRUE, the first clause and the second clause would both need to evaluate as TRUE.

As mentioned above, a variable in either negated or non-negated state, as represented in the CNF formula, is referred to as a 'literal'. To clarify this distinction, a simple case can be considered: if $X_0$ may be a variable representing an amount of network traffic, but it is not a Boolean variable. $X_0$ as a Boolean variable may instead represent the presence or absence of network traffic, i.e. if there is network traffic, the literal $X_0$ evaluates as TRUE, and vice versa, irrespective of the actual amount of network traffic. Thus, $\neg X_0$ may represent there being no network traffic.

A variable assignment is a mapping from variables to Boolean values: TRUE or FALSE (which may also be referred to herein as T or F respectively). A disjunctive clause is true (meaning that it evaluates to TRUE) under a variable assignment if at least one literal in the clause evaluates to TRUE. A CNF is true under a variable assignment if all clauses in CNF evaluate to TRUE.

Thus, solving a CNF formula may involve finding a combination of variable assignments (e.g. $X_0 = T$, $X_1 = T$, $X_2 = F$...) such that at least one literal in each clause evaluates to TRUE, and thereby each clause evaluates to TRUE. That is, solving a CNF formula may involve identifying a combination of variable assignments that causes the CNF formula to evaluate as TRUE.

In N-SAT, the problem is to find an assignment of Boolean variables to satisfy a CNF where each clause has at most N literals. An example of N-SAT is 3-SAT which involves, for example, finding a variable assignment to make the following CNF true:

$$(X_0 \vee \neg X_1 \vee \neg X_2) \wedge (\neg X_1 \vee X_3 \vee \neg X_4) \wedge (X_2 \vee \neg X_3 \neg X_5)$$

i.e., finding a way to assign the value either TRUE (T) or FALSE (F) to each of the variables $X_{0,\ldots,N}$, e.g., $X_0 = T$, $X_1 = F$, $X_2 = T$ ..., so as to make the overall expression TRUE.

Already 3-SAT is an NP-complete problem.

Verifying a solution is self-evidently possible in P time, as this involves simply filling in the values and evaluating the expression. However, there is no known P time algorithm to find solutions.

Solving arbitrary NP-complete problems involves testing the exponential number of all possible solutions. This makes solving large NP-complete problems using a conventional electronic computer unfeasible. Quantum computers have not demonstrated an advantage over classical computers in this respect, either.

**SUMMARY**

Testing all possible solutions of an NP-complete problem can be done independently for each solution using local computation and without communications between processors. Therefore, this implies that as many processors as possible should be used to solve arbitrary NP-complete problems.

The smallest possible processors with current technology are molecules. Avogadro's number is ~6 · 10$^{23}$, so molecular computers can contain vastly greater numbers of processors than any other known type of computer. Therefore, the present disclosure is based on a recognition that a particular use of a specialized molecular computer can provide an advantageously efficient way to solve arbitrary NP-complete problems, as described below.

Thus, the presently disclosed technique provides a molecular based computer optimized for solving large NP-complete problems. As N-SAT is an NP-complete problem, all other NP problems can be translated into an N-SAT problem in P time. Thus, according to disclosed embodiments, an arbitrary NP-complete problem can be translated into a N-SAT problem and efficiently solved by a specialized molecular computer, as described herein.

According to an aspect of the present disclosure, there is provided a method for operating a molecular computer to solve an NP-complete mathematical problem. It will be appreciated from the disclosure herein that the molecular computer described herein is particular configured in such a way as to enable a similarly particular mode of operation. Thus, there is provided herein an efficient technique for solving NP-complete problems, and accordingly an improvement of the efficiency of technical systems which may require such solutions.

According this aspect, the method comprises obtaining a molecular sequence encoding an N-SAT problem having a plurality of clauses formed from a plurality of literals in conjunctive normal form. The molecular sequence may be obtained in synthesized molecular form or in a form suitable for providing to a means for synthesizing the molecular sequence in molecular form.

The molecular sequence may be a DNA sequence (including single-strand DNA), an RNA sequence, a PNA sequence, or any polymer sequence suitable for encoding the N-SAT problem. Viewed from one perspective, for example in the context of a DNA sequence having bases C, A, T, and G, it can be analogously understood that, in the same way that the N-SAT problem may be encoded in binary zeroes and ones in an electronic computer, being written and read using the charging and discharging of components on a chip, the N-SAT problem may similarly be encoded using these base pairs of the DNA sequence.

The N-SAT problem is encoded into the molecular sequence as a series of symbols, each symbol comprising at least one unit of the molecular sequence. For example, a symbol could be a single unit of the molecular sequence, or any arbitrary plurality of units. In some examples, it may be preferred to optimize encoding by determining a minimum number of units required for a symbol, depending on the informational complexity required of the symbol. For example, if the molecular sequence is a DNA sequence, the units of the molecular sequence may be bases thereof (i.e C, A, T, or G). Thus, if a symbol is intended to represent four or fewer options, the symbol may be only one unit, selected from the bases, where each option is assigned a respective base. It will then be appreciated that, if the symbol is intended to represent (and/or be distinguishable from) five or more options, then the symbol may be formed of multiple bases.

By encoding the N-SAT problem directly into the molecular sequence for inputting into the molecular computer, non-problem-specific molecular processes may then be applied, as described in further detail below, thus allowing for parallelization of the molecular computer. That is, the encoding of the N-SAT problem into the molecular sequence can allow for multiple problems to be input into the molecular computer at a same time without interfering with each other, thus significantly increasing the potential processing throughput of the molecular computer.

According to the present method, each literal of each clause of the N-SAT problem is encoded as a literal-encoding sequence such that, for each literal, the literal-encoding sequence comprises a variable symbol identifying a variable of the N-SAT problem, a polarity symbol representing a polarity of the literal, and a truth symbol for representing an assigned truth value.

The variable symbol may contain one or more units arranged in such a way as to identify a variable of the N-SAT problem. That is, if the N-SAT problem contains three variables $X_1$, $X_2$, $X_3$, for example, the molecular sequence may contain a variable symbol identifying $X_1$, a variable symbol identifying $X_2$. and a variable symbol identifying $X_3$. It will be appreciated that, in N-SAT problems that have a large number of variables, the variable symbols may need to comprise a greater number of units in order to be mutually distinguishable.

The polarity symbol may contain one or more units arranged in such a way as to identify a polarity of a literal. A literal is a Boolean entity representing either a negated or non-negated variable in the N-SAT problem. Thus, the polarity of a literal may be positive (i.e. non-negated) or negative (i.e. negated). For example, if it is desired to encode $\neg X_1$, a variable identifier identifying $X_1$ may be encoded with an accompanying polarity symbol representing negation (i.e. negative polarity). If it is desired to encode $X_1$ (i.e. positive $X_1$), then the variable identifier identifying $X_1$ may be encoded with an accompanying polarity symbol representing non-negation (i.e. positive polarity).

In some examples, one of the polarities may be default implicit such that the other polarity need only be encoded. That is, it may be assumed that a literal is positive by default and thus only negative polarity may be explicitly encoded in the molecular sequence.

According to an example, the variable symbol and the polarity symbol may collectively be encoded in a literal-identifier symbol, such that literals corresponding to a same variable but having different polarities may be represented by different literal-identifier symbols. That is, instead of encoding $\neg X_1$ and $X_1$ using a same variable identifier with a modulated polarity symbol, the literals $\neg X_1$ and $X_1$ may have their own unique literal-identifier symbols containing one or more units of the molecular sequence.

The truth symbol may contain one or more units arranged in such a way as to identify an assigned or to-be-assigned truth value (this truth assignment process being explained in more detail below). The truth symbol may be assigned a truth value representing true or false. For example, in the case where the molecular sequence is a DNA sequence, the truth symbol may comprise one base of the molecular sequence. A true truth value (i.e. a truth value representing true) may be a T-base, and a false truth value may be a C-base, for example. As used herein, 'assigning' a truth value may include editing the truth value to correspond to assigned truth value.

In some examples, the molecular sequence may be initialized with all truth symbols having truth values representing false, such that only edits from false to true (e.g. editing a DNA base from C to T) may be required during processing (described in more detail below). Therefore, the number of molecular edits required during the processing of the molecular computer may be advantageously reduced.

According to some examples, the polarity symbol and the truth symbol may collectively be encoded in a consolidated symbol, such that the consolidated symbol may represent a consolidated value of the polarity of the literal and the assigned (or to-be-assigned) truth value for the literal. For example, the consolidated symbol may be encoded in the molecular sequence initially according to the polarity of the literals, and then selectively reversed according to the assigned truth value.

That is, encoding the N-SAT problem into the molecular sequence may comprise encoding a polarity of literals into the consolidated symbol such that a positive literal is assigned a consolidated symbol representing true, and a negative literal is assigned a consolidated symbol representing false. It will be appreciated that the terms 'true' and 'false' are chosen for ease of understanding the eventually evaluated truth value of a variable/clause and not intended to overwrite the proper meaning of positive and negative polarities when used in the context of literals.

By representing information in a consolidated way, the length of the molecular sequence may advantageously be reduced, allowing for more efficient molecular editing or cutting to be performed.

The molecular sequence may be structured or ordered in such a way that, from one end of the sequence to the other, subsequent variables within a clause (as they may appear in a mathematical representation of the N-SAT problem) are sequentially featured, and subsequent clauses are similarly sequentially featured such that the placement of a variable or clause in the encoded molecular sequence may correspond to the placement of said variable or clause in the mathematical representation of the N-SAT problem.

Accordingly, and because N-SAT problems in the conjunctive normal form implicitly contain logically conjunct clauses (i.e. connected by a logical 'AND'), each clause containing logically disjunct literals (i.e. connected by a logical 'OR'), the 'AND' and 'OR' junctions may be implicit, thus enabling the encoding molecular sequence to be shorter. Alternatively, in some examples, the molecular sequence may further comprise an OR symbol for representing logical disjunction, and/or an AND symbol for representing logical conjunction.

Once the molecular sequence has been obtained, the method further comprises obtaining replicas of the molecular sequence. It will be appreciated that the method may be initiated by obtaining replicas of the molecular sequence, as doing so would comprise obtaining the molecular sequence. It will be appreciated that obtaining replicas of the molecular sequence comprises obtaining molecular copies of the molecular sequence by some replicating means. For example, in the case that the molecular sequence is DNA, obtaining replicas of the molecular sequence may comprise applying PCR techniques or the like.

According to the present aspect of the disclosure, the method further comprises, for each pair of replicas, editing the literal-encoding sequences having a variable symbol identifying a particular variable of the N-SAT problem such that, for one replica of the pair, the truth symbol is assigned a truth value representing true and, for the other replica of the pair, the truth symbol is assigned a truth value representing false.

Accordingly, the method further comprises obtaining, from said editing, a pool of potential-solution sequences, each potential-solution sequence encoding a potential solution to the N-SAT problem.

The molecular editing may be performed by any suitable technique such as CRISPR (e.g. CRISPR-Cas9) or PCR techniques, carrying out DNA or PNA targeted site-directed mutagenesis, or any other suitable sequence-controlled polymer editing method, including zinc-finger domains recognition and transcription activator-like effector (TALE)-protein recognition.

The term "CRISPR" or "CRISPR-Cas9" may refer to the various CRISPR-Cas9 and -CPF1, (and other) systems that can be programmed to target specific stretches of molecular sequences and to edit molecular sequences such as DNA at precise locations, as well as for other purposes, such as for diagnostic tools.

In an example, a split enzyme, such as a deaminase, may be used for modification of a unit of a molecular sequence, such as a base within an encoding DNA sequence/strand, where the enzyme may not be active (in solution) as two halves, or smaller fragments, until brought together on a target portion of the molecular sequence (e.g. DNA) by adjacently bound programmable (DNA-)binding proteins to reconstitute an active enzyme.

In a case where the variable symbol, the polarity symbol, and the truth symbol are each separately encoded, editing the literal-encoding sequences to assign a truth value representing true may comprise editing the truth symbol to represent true, and assigning a truth value representing false may comprise editing the truth symbol to represent false. This may be the same for a case where the variable symbol and the polarity symbol are collectively encoded in a literal-identifier symbol, as the truth symbol may still be separately encoded from the literal-identifier symbol.

In a case where the polarity symbol and the truth symbol are collectively encoded in a consolidated symbol, assigning a truth value representing true may comprise maintaining the consolidated symbol (i.e. not editing it such that it preserves its as-encoded state corresponding to the polarity of the literal). Assigning a truth value representing false may then comprise reversing the consolidated symbol (i.e. if the encoded state of the consolidated symbol was 'false', for a negative literal, then reversing the consolidated symbol may comprise editing the consolidated symbol to represent 'true' instead).

The truth-value assignment process may be iterated across each variable of the N-SAT problem. For example, if the N-SAT problem contains three variables $X_1, X_2, X_3$, for example, there may be three iterations of the truth-value of assignment.

Each iteration may comprise a step of splitting the replicas into one or more pairs, e.g. by dividing the pool of potential-solution sequences into two separate vessels, and then editing one replica of the pair such that a literal-encoding sequence for a particular variable (e.g. $X_1$) has its associated truth symbol edited to represent true, and vice versa for the other replica of the pair. This may then be repeated for $X_2$ and $X_3$, whereby the edited pairs are preferably recombined before beginning the next iteration. Accordingly, every combination of every variable having true or false assignments can be achieved in the pool of potential-solution sequences.

The particular variable may be recognized by using the encoded variable identifier (or the literal-identifier if the literal identifier is encoded therein).

The one or more pairs may then be recombined to form the pool of potential-solution sequences, each potential-solution sequence containing a different truth assignment, where a truth assignment is an assignment of true or false for each variable. For example, $X_1 = T, X_2 = F, X_3 = T$ is a truth assignment that could result in a potential solution to the N-SAT problem.

The presently disclosed method further comprises identifying, from the pool of potential-solution sequences, a solution sequence, based on a determination that each encoded clause of a potential-solution sequence contains at least one true-evaluating literal-encoding sequence, the solution sequence encoding a solution to the N-SAT problem. The N-SAT problem corresponds to the NP-complete mathematical problem such that the solution to the N-SAT problem can be decoded from the solution sequence and used for solving the NP-complete mathematical problem.

A solution to an N-SAT problem is that which, overall, evaluates to true. According to the conjunctive normal form of N-SAT problems, for a potential-solution to evaluate as true overall, at least one variable in each clause will need to be true-evaluating.

As used herein, 'true-evaluating' may differ from a 'true' truth assignment. This is because a negative polarity literal assigned true will evaluate as false. Similarly, a negative polarity literal assigned false will evaluate as true.

Thus, in a case where the polarity symbol and the truth symbol are collectively encoded in a consolidated symbol, a true-evaluating literal-encoding sequence may comprise a consolidated symbol representing true, because polarity is not separately encoded in this case.

However, when the variable symbol, the polarity symbol, and the truth symbol are each separately encoded, a true-evaluating literal-encoding sequence comprises a truth symbol representing true and a positive polarity symbol, or a truth symbol representing false and a negative polarity symbol. Similarly, when the variable symbol the polarity symbol are collectively encoded in a literal-identifier symbol, a true-evaluating literal-encoding sequence comprises a literal-identifier corresponding to a positive literal and a truth symbol representing true, or a literal-identifier corresponding to a negative literal and a truth symbol representing false.

There are two categories for identifying the solution sequence disclosed herein: direct and indirect methods. Direct methods are methods relating to the direct detection of true-evaluating sequences, these being sequences that consist of clauses having at least one true-evaluating literal-encoding sequence. Indirect methods are methods relating to the detection of false-evaluating sequences (or clauses, because even one false-evaluating clause causes a sequence to be false-evaluating overall) and the removal thereof from the pool of potential-solution sequences, or the prevention thereof from replicating.

One example of an indirect technique may comprise cutting identified non-solutions using a molecular cutter, which may alter the non-solution sequence in such a way that it can be isolated from the solution sequence(s), e.g. if the non-solution sequences are shorter, then molecular sequences can be sorted by length/mass to identify the longest (i.e. uncut) sequence(s) as being solution sequence(s).

In an example, the molecular sequence may further comprise a start symbol at an end of the molecular sequence, and a finish symbol at the other end of the molecular sequence. Therefore, identifying the solution sequence may comprise identifying non-solution sequences based on a determination that a clause in a potential-solution sequence contains no true-evaluating literal-encoding sequences. Thus, cutting non-solution sequences can act to thereby separate the start symbol from the finish symbol of the non-solution sequence. After said cutting, identifying solution-sequences can be achieved by identifying molecular sequences having a start symbol and a finish symbol.

Identifying molecular sequences having a start symbol and a finish symbol may be achieved by, for example, physically attaching all sequences with the start symbol to beads, washing away non-attached sequences, then attaching all sequences with the end symbol to beads, and washing away non-attached sequences.

Cutting non-solution sequences may be performed using a molecular cutter based on CRISPR (e.g. CRISPR/Cas9) techniques or similar molecular cutting technology, such as zinc finger nucleases (ZFN), transcription activator-like effector nucleases (TALENs), and the like.

The molecular cutter may target false-evaluating literal-encoding sequences. This may be achieved by determining subsequences/motifs corresponding to a false-evaluating clause, and configuring a molecular cutter to cut sequences containing such false-clause-indicating motifs. Only one cut may be required to identify the potential-solution sequence as a non-solution sequence, although there may be multiple false-evaluating clauses in said non-solution sequence.

An advantage of cutting non-solution sequences may be an avoidance of replication of non-solution sequences during further processing of the pool, thereby preventing 'flooding' of the pool with non-solution sequences and avoiding the performance of unnecessary molecular processes.

As an alternative or complement to the cutting of non-solution sequences (sometimes referred to in short as 'non-solutions'), another indirect detection method for identifying the solution sequence may comprise identifying non-solution sequences based on a determination that a clause in a potential-solution sequence contains no true-evaluating literal-encoding sequences, and marking non-solution sequences with a molecular marker. After said marking, identifying solution-sequences can be achieved by identifying molecular sequences not comprising the molecular marker.

In some examples, the molecular marker may block operation of a replication process such as a PCR reaction, thereby enabling preferential replication of solution sequences. The solution sequences may then greatly outnumber non-solution sequences, thus allowing for ease of identification. Molecular marker signals may also be by fluorescent probes, electron-transfer (redox) probes, and the like.

According to further examples, the molecular marker may be an oligo-coupled particle, that is, an oligonucleotide (sense or antisense matching) -coupled particle, such as a magnetic particle. Thus, solution-sequences may be identified as molecular sequences not comprising the molecular marker by, e.g., magnetically separating non-solution sequences from solution sequences. The coupled particle may not necessarily be magnetic but may instead allow for separation or sorting of particles using an electric field, vibration, or other techniques.

As a further possible addition/alternative, the potential-solution sequences (e.g. DNA molecules) may be methylated (e.g. with a template) before, during or after the steps of editing and/or propagation either biologically by bacterial hosts or enzymatically *in vitro*. Thereafter, identifying a solution sequence may comprise performing replication reactions (e.g. PCR amplification) using specially designated primers from said methylated template. Then, after said replication/amplification, the methylated template may be removed from the pool by digestion of the methylated template, e.g. with a methylation-sensitive restriction enzyme.

Whilst one approach may involve editing literal-encoding sequences for all variables of the N-SAT problem, thus generating every possible truth assignment, this is advantageously not required by the present technique. Indeed, editing of the literal-encoding sequences and identifying the solution sequence may be performed simultaneously. That is, the process of 'pruning' non-solution sequences from the pool of potential-solution sequences, or otherwise indirectly or directly identifying the solution sequence may be carried out even before the pool of potential-solution sequences contains every potential-solution sequence.

Indeed, it is possible that one of the first generated potential-solution sequences is a solution sequence and, thus, it may significantly reduce processing time to carry out the editing of the literal-encoding sequences at a same time as possible solution sequences are identified.

True- or false-evaluating clauses/variables may be identified or targeted based on a determined sequence, motif, or molecular pattern that corresponds thereto. For example, the molecular cutter may be configured to cut (or the molecular marker configured to attach to) a false evaluation generating motif. In a 3-SAT case where the polarity symbol and truth symbol are separately encoded, these may include: (PF PF PF), (NT PF PF), (PF NT PF)...and so on, where 'P' and 'N' are positive and negative literal polarities, respectively, and 'T' and 'F' are true and false truth symbol assignments, respectively.

Additionally or alternatively, identifying the solution sequence may involve the propagation of information between all or a subset of literals in a clause. In a case where the information of all literals of a clause is collected into a single assessment/evaluation, this may be referred to as 'clause evaluation', as the overall truth value of the clause is a function of at least one literal of the clause being true-evaluating (the literals being logically disjunct).

Thus, the molecular sequence may further comprise an evaluation symbol for a clause, representing a truth evaluation of the clause. Identifying the solution sequence may then comprise editing the evaluation symbol of the clause to represent an aggregated truth evaluation for the plurality of literal-encoding sequences comprised in the clause. If at least one literal-encoding sequence is true-evaluating, the evaluation symbol may be edited to represent true. Additionally or alternatively, if the plurality of literal-encoding sequences are false-evaluating, the evaluation symbol is edited to represent false. That is, the evaluation symbol may only be used to identify true-evaluating clauses, where false-evaluating clauses may have a default evaluation symbol representing a false evaluation. The opposite case may also be used, where a true-evaluation may be default and only false-evaluating clauses may have their evaluation symbol edited.

Identifying the solution sequence may then be based on a determination that a potential-solution sequence does not comprise an evaluation symbol representing false, this being equivalent to a determination that a potential-solution sequence only comprises evaluation symbols representing true.

The evaluation symbol for a clause may be at a predetermined part of the a sequence, such as at a start or an end of a clause, and/or the evaluation symbol may be suitably configured for identification/targeting by molecular cutters, molecular markers or the like.

Such propagation techniques may advantageously reduce the number of molecular cutters or marker target motifs required for processing the pool of potential-solution sequences. For example, in a 3-SAT context, where polarity and truth values are separately encoded, there are eight different motifs that would indicate a false-evaluating clause (some of which are listed above). The number of motifs may increase with increasing N in N-SAT. Thus, reducing the number of motifs (and/or the length thereof) that are expected to indicate a false-evaluating clause may improve the efficiency of the identification of solution sequences from the pool of potential-solution sequences, and thus improve the processing time of the molecular computing in determining a solution to an NP-problem.

As mentioned above, information propagation may be amongst a subset of literals in a clause, thus reducing the number of false-evaluation indicators/motifs required to indicate a false-evaluating clause and thus be including in consideration for cutting, marking etc.

In some examples, the molecular sequence may further comprise an aggregation symbol for a clause, representing an aggregated truth evaluation for (two or more) literal-encoding sequences comprised in the clause. Accordingly, identifying the solution sequence may comprise editing the aggregation symbol of a clause in a potential-solution sequence to represent an aggregated truth value for the literal-encoding sequences (i.e. said two or more). If at least one literal-encoding sequence is true-evaluating, the aggregation symbol may be edited to represent true. If (and only if) all of the literal-encoding sequences (under consideration, which may not necessarily be all of the literal-encoding sequences of the clause) are false-evaluating, the aggregation symbol may be edited to represent false. Thus, identifying the solution sequence may advantageously be based at least part on an aggregation symbol in a potential-solution sequence representing true, thus allowing for a single determination of a true- or false-evaluation in place of potentially many (especially true with high-N N-SAT problems).

Further to those discussed above, another technique for improving the efficiency of the molecular may include parallelization techniques. Viewed from one perspective, the present approach can be seen as particularly suited to parallelization as the N-SAT problem is directly encoded into the molecular sequence, and molecular editing/cutting can be targeted at motifs that may be non-specific in respect of the N-SAT problem, or at least shared between encoded N-SAT problems. Thus, a plurality of molecular sequences encoding a respective plurality of N-SAT problems can be processed (e.g. have truth symbols edited, have false-evaluating clauses cut or marked, etc.) in parallel in the same vessel.

A second N-SAT problem may be encoded into a second molecular sequence, for example, which may be obtained in a similar manner to the molecular sequence previously discussed. Then, the method may further comprise combining a second pool of potential-solution sequences with the pool of potential-solution sequences, to obtain a combined pool. The second pool may be obtained in a substantially similar way as the pool discussed above. In some examples, one or more variables of the second N-SAT problem may be shared with the (first) N-SAT problem. Edits and solution identification may thus be shared between different N-SAT problems, resulting in improved parallel problem solving.

Thus, solutions to the N-SAT problems and the second N-SAT, as well as any number of further N-SAT problems, can be identified in parallel from the same combined pool, thus significantly improving the efficiency of the molecular computer.

Moreover, heuristic and/or error correcting techniques may be implemented to more rapidly guide the molecular computer towards generating and recognizing the solution sequence. For examples, error-correcting codes may be used. Such codes are used ubiquitously in electronic computers, and classical error-correcting code methods can be directly applied to a molecular computing method such as that described herein, unlike quantum computing methods.

Kinetic proofreading may also be implemented, utilizing irreversible reactions to enable enzymes or similar tools to discriminate between two possible reaction pathways (i.e. to correct or incorrect sequences) with an improved accuracy, based on the difference in the activation energy between these two pathways.

Molecular cutters may also be used to cut sequences that are 'non-grammatical' (e.g. incorrect symbols) sequences, i.e. sequences that have been produced by noisy computations. Noisy computations may include imperfect molecular processes, such as editing or cutting processes having imperfect specificity or efficiency, or other introductions of erroneous edits (or non-edits), cuts (or non-cuts) and the like.

Moreover, if constraints on the correct solution are known, these imply constraints in the N-SAT sequences, and sequences not conforming to these constraints can be also be cut (or marked) and removed.

Constraints may be found, for example, using a standard SAT solver (SSAT solver) implemented in an electronic computer, which can be used to partially solve the N-SAT problem and, during this process, identify more important variables in the N-SAT problem such that greater search/solve priority is placed on these variables during the molecular computing method.

Molecular read-outs/sequencing may be employed to determine not only successful, but also unsuccessful truth assignments, i.e. those that lead to a generation of a non-solution sequence. During an interleaved computation (i.e. a feedback process of editing literal-encoding sequences and identifying solution sequences) sequencing/reading can be used to monitor the clauses that eventually are determined as evaluating to false. This can then be used to identify variable truth assignments that bias clauses to be false-evaluating.

This information can then be used to feedback and bias the proportion of the identified variables that are assigned to true and false. The default is that there is an equal probability of a variable being assigned true or false (e.g. there may be an equal number of sequences in each vessel, if separate vessels are used for truth symbol editing). This default probability can be changed from 0 to 1, for example. To take an example, if it is observed that $X_1 = T$ is often present in clauses that evaluate to false, then the probability of assigning $X_1 = T$ may be reduced.

This ability to use sequencing to monitor an ongoing identification of a solution sequence therefore enables the system to learn and adapt its search and results in an improved efficiency of the molecular computer, as resources are not wasted on truth value assignments that are strongly suspected to result in non-solution sequences.

Put another way, the method may further comprise, during a feedback process of editing literal-encoding sequences and identifying solution sequences, identifying a non-solution sequence encoding a non-solution to the N-SAT problem. A truth value assignment that generated the non-solution sequence may then be determined, the truth value assignment being one or more assigned truth values for particular variables of the N-SAT problem. In response to determining the truth value assignment that generated the non-solution sequence, a frequency of use of the truth value assignment, when editing literal-encoding sequences, may be reduced accordingly.

Thus, the molecular computer may more efficiently and reliably identify solution sequences, corresponding to an encoding of a solution to the N-SAT problem.

According to some examples, the method may further comprise decoding the solution sequence by translating the solution sequence into the solution to the N-SAT problem. Indeed, the beginning of the method may further comprise, in some examples, translating the N-SAT problem into the molecular sequence. Translation may be between a mathematical or computer-readable form, and a molecular-encoded form, and may be performed by any suitable apparatus, such as DNA writers and DNA sequencers (if the molecular sequence is DNA).

The solution to the N-SAT problem may be further translated into a solution to an NP-problem, if enough information is provided by a requesting party for this. Thus, a decoded solution to a N-SAT problem, or an ultimate solution to an NP-problem may be provided back to a requesting party that requested a solution to an NP-complete problem (or N-SAT problem if the NP-complete problem is already translated by the requesting party).

The architecture of the molecular computer may take any suitable form, such as one or more reaction vessels like test tubes, beakers, and the like (for aqueous reactions). Alternatively, a series of micro-fluidic chambers maybe used, each chamber performing a respective portion of the presently described method, or multiple steps thereof if possible.

The operation of the molecular computer may preferably be automated as much as possible, so as to improve reliability and streamline operations. The apparatus comprising means for performing the above described method (whatever these may be), may be integrated into a cloud-computing system, that may be accessible via the internet for example.

Thus, a requesting party may upload a problem (an N-SAT problem or a problem capable of being translated thereinto) to the cloud computing system, which may then apply the method of molecular computing as described above to return a solution. The problem may relate to logistics, scheduling, or similar problems that are typically NP-complete, and thus solutions in these fields can be readily provided in an efficient manner, the specifics of which are mentioned above and discussed below in connection with a number of explanatory figures.

## BRIEF DESCRIPTION OF THE FIGURES

One or more embodiments will be described, by way of example only, and with reference to the following figures, in which:

Figure 1 schematically shows a method for molecular computing, according to an embodiment;
Figure 2 schematically shows a molecular computing process, according to an embodiment;
Figure 3 schematically shows a molecular computing apparatus, according to an embodiment;
Figure 4 schematically shows a computing system comprising the molecular computing apparatus of figure 3, according to an embodiment; and
Figure 5 schematically shows a cloud computing system comprising the computing system of figure 4, interacting with a requesting party, according to an embodiment.

## DETAILED DESCRIPTION

The presently disclosed technique is described in the following by way of a number of illustrative examples. It will be appreciated that these examples are provided for illustration and explanation only and are not intended to be limiting on the scope of the disclosure. Instead, the scope is to be defined by the appended claims. Furthermore, although the examples may be presented in the form of individual embodiments, it will be recognized that the disclosure also covers combinations of the embodiments described herein.

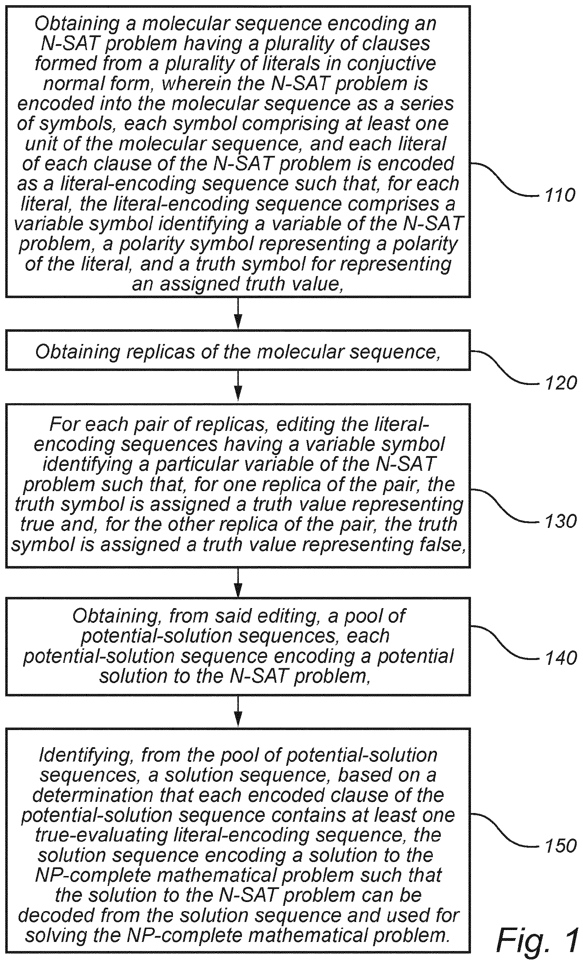

Figure 1 schematically shows a method 100 for molecular computing, according to an embodiment.

As illustrated in figure 1, the method 100 comprises obtaining 110 a molecular sequence encoding an N-SAT problem having a plurality of clauses formed from a plurality of literals in conjunctive normal form, wherein the N-SAT problem is encoded into the molecular sequence as a series of symbols, each symbol comprising at least one unit of the molecular sequence, and each literal of each clause of the N-SAT problem is encoded as a literal-encoding sequence such that, for each literal, the literal-encoding sequence comprises a variable symbol identifying a variable of the N-SAT problem, a polarity symbol representing a polarity of the literal, and a truth symbol for representing an assigned truth value.

The method 100 further comprises obtaining 120 replicas of the molecular sequence.

Although steps 110 and 120 are illustrated separately, it will be appreciated that, were replicas of the molecular sequence to be obtained at step 110, step 120 would be achieved in the same step.

As illustrated, the method 100 further comprises, for each pair of replicas, editing 130 the literal-encoding sequences having a variable symbol identifying a particular variable of the N-SAT problem such that, for one replica of the pair, the truth symbol is assigned a truth value representing true and, for the other replica of the pair, the truth symbol is assigned a truth value representing false.

The method 100 then comprises obtaining 140, from said editing 130, a pool of potential-solution sequences, each potential-solution sequence encoding a potential solution to the N-SAT problem.

Finally, the illustrated method 100 comprises identifying 150, from the pool of potential-solution sequences, a solution sequence, based on a determination that each encoded clause of the potential-solution sequence contains at least one true-evaluating literal-encoding sequence, the solution sequence encoding a solution to the N-SAT problem, wherein the N-SAT problem corresponds to the NP-complete mathematical problem such that the solution to the N-SAT problem can be decoded from the solution sequence and used for solving the NP-complete mathematical problem.

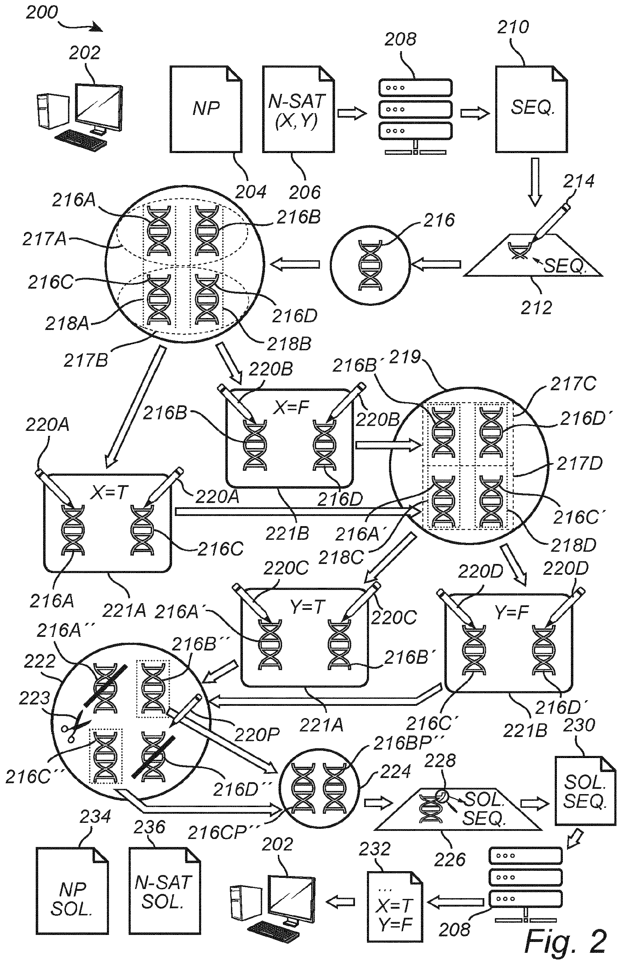

This method 100 is discussed in more detail in relation to figure 2, which shows a molecular computing process 200 comprising the method 100 of figure 1.

The process 200 may begin with a requesting party 202 sending a NP-complete problem 204 or an N-SAT problem 206 derived therefrom to an electronic computing system 208. The electronic computing system 208 may be situated in a cloud computing environment remote from the requesting party 202. If the requesting party 202 sends a NP-complete problem 204 without or instead of an N-SAT problem 206, the electronic computing system 208 may be configured to derive an N-SAT problem 206 from the NP-complete problem, according to known techniques.

The N-SAT problem 206 may have variables X and *Y* for the purposes of illustration, although any number of variables could be dealt with using this same approach.

For the purposes of figure 2, an example N-SAT problem 206 is used, wherein the problem 206 is two clauses of a 2-SAT problem, which may also be referred to as an 'XOR' problem:

$(\neg Y \lor \neg X) \land (Y \lor X)$

The N-SAT problem 206 may then be translated/converted into a representation 210 of a molecular sequence, also referred to as a molecular representation.

Using a DNA molecular sequence as an example, an encoding scheme may be as follows:

| Label | Short representation | Molecular encoding |
|---|---|---|
| X | X | AGATAG |
| Y | Y | GATGTG |
| POSITIVE (polarity symbol) | P | A |
| NEGATIVE (polarity symbol) | N | T |
| TRUE (truth symbol) | T | T |
| FALSE (truth symbol) | F | C |
| TRUE_AGG (aggregation symbol) | S | C |
| FALSE_AGG (aggregation symbol) | C | T |

Thus, a short representation of the N-SAT problem may be:

*NF - S - Y - NF - X - PF - S - Y - PF - X* where, in this example, each variable is assigned FALSE as a default initial encoding, each evaluation symbol is initially encoded as TRUE_AGG, and the logical OR and AND are implicit. That is, in this example, there is no explicit molecular encoding for the OR and AND logical junctions.

The representation 210 of the molecular sequence may be any representation that is suitable for providing to some synthesizing means 212 such as a DNA writer, as in the present example the molecular sequence is a DNA sequence. The synthesizing means 212 may be configured to use a molecular synthesizer 214 to convert the representation 210 of the molecular sequence into a molecular sequence 216 such as a DNA sequence. The synthesizing means 214 may form part of a hybrid computing system that also comprises the electronic computing system 208 and the molecular computer(s).

A molecular representation 210 may thus be:

```
    N F       S     Y           N F             X
...-T-C-TGGT-C-TGG-GATGTG-AGG-T-C-TGGT-C-TGG-AGATAG-AGG-CAGAGTGTGAG-
(SEQ ID NO:1)


      P F       S     Y           P F             X
    -AGG-A-C-TGGT-C-TGG-GATGTG-AGG-A-C-TGGT-C-TGG-AGATAG-AGG-...
    (SEQ ID NO:2)
```

In the above molecular representation 210, adjacent symbols are separated by a dash '-' for clarity. The literal encoding sequences may be as follows:

| | | |
|---|---|---|
| *NF - S - Y* | T-C-TGGT-C-TGG-GATGTG-AGG | SEQ ID NO:3 |
| *NF - X* | T-C-TGGT-C-TGG-AGATAG-AGG | SEQ ID NO:4 |
| *PF - S - Y* | A-C-TGGT-C-TGG-GATGTG-AGG | SEQ ID NO:5 |
| *PF-X* | A-C-TGGT-C-TGG-AGATAG-AGG | SEQ ID NO:6 |

Here, there are two literal-encoding sequences per clause because there are two literals per clause.

It will be appreciated that the molecular sequence 216 may further comprise targeting/indicator motifs such as a protospacer adjacent motif (PAM), if CRISPR is intended for performing molecular editing, or similar such motifs adjacent to a symbol in the molecular sequence 216 such that the symbol can be used for targeting by molecular editors (this term being used to include molecular cutters as well). A PAM symbol may be identified in the above molecular representation 210 as containing an NGG sequence, where N is one of A, C, T, and G (i.e. DNA base pairs).

Furthermore, the molecular sequence 216 may comprise a linking symbol between or around clauses, in place of an explicit AND symbol, as it may not be needed to propagate information between clauses. A linking symbol may be identified in the above molecular representation 210 as CAGAGTGTGAG.

According to the presently disclosed method, the molecular sequence 216 may also be obtained directly, already having the N-SAT problem 206 encoded therein.

Once the molecular sequence is obtained, replicas 216A-D of the molecular sequence 216 may then be obtained. In some examples, these steps may be one and the same in that, in the initial obtaining of the molecular sequence 216, multiple replicas thereof are obtained.

Replicas 216A-D may be obtained by any suitable method for molecular replication such as PCR techniques and the like. DNA sequences, for example, may readily be replicated using PCR techniques or other DNA replication techniques such as phosphoramidite solid-state step-by-step oligonucleotide synthesis.

The replicas 216A-D may then be split into separate vessels 221A and 221B (collectively 'vessels 221'). In the illustrated example, one portion/half 218A of the replicas 216A-D (replicas 216A and 216C) are directed to vessel 221A, whilst the other portion/half 218B (replicas 216B and 216D) are directed to vessel 221B. The vessels 221 may be, for example, chambers of, or droplets on, a microfluidic apparatus such as a lab-on-a-chip, or similar such apparatus. In some examples, the vessels 221 may be portions of a same vessel, allowing for parallel reactions to take place.

In the vessel 221A, the replicas 216A and 216C may be edited so that the variable *X* is assigned true, i.e. the assignment *X = T*. This may be performed using, for example, a specific CRISPR/RNA guide targeting the variable identifier for *X*.

Thus, a short representation of the edited sequences 216A' and 216C' may be as follows (with changes in the truth symbol portions):

*NF - S - Y - NT - X - PF - S - Y - PT - X*

This editing may be carried out by a molecular editor 220A, which may be a specific CRISPR/RNA configured/guided to target the variable *X* to assign TRUE to the truth symbol in the literals containing the variable *X*. The molecular editor 220A may alternatively use ZFN or TALE-protein recognition techniques.

Similarly, the replicas 216B and 216D may be given an assignment of *X = F*. As the default truth symbol assignment in this example is FALSE, there may be no editing required in this case (i.e. molecular editor 220B may not be required). A short representation of these sequences 216B' and 216D' may thus be (unchanged):

*NF - S - Y - NF - X - PF - S - Y - PF - X*

Thus, for each pair, which can be defined as pair 217A, containing replicas 216A and 216B, and pair 217B, containing replicas 216C and 216D, the truth symbol is edited such that one replica 216A, 216C is edited to represent true, whilst the other replica 216B, 216D is edited to represent false.

According to examples, the apportionment of the portions 218A and 218B may be adjusted according to a feedback control. For example, it may be determined at a later stage, and then fed back, that *X = T* is often found in false-evaluating clauses, such that portion 218A is made smaller (e.g. as a proportion) and portion 218B is made larger.

Once edited, the sequences are not strictly replicas of the molecular sequence 216. Thus, to distinguish from the replicas 216A-D, which are identical replicas of molecular sequence 216, primes are added to the reference numerals to indicate that the sequences 216A'-D' may have undergone molecular editing.

After editing, the sequences 216A'-D' are recombined into an intermediate pool 219 and then split again into portions 218C and 218D, containing sequences 216A' and 216B', and 216C' and 216D', respectively. It will be appreciated that the new portions lead to different pairings, where the first pair 217C contains sequences 216A' and 216C' and the second pair 217D contains sequences 216B' and 216D'. Thus, a full combination of variable truth assignments can be achieved.

Similarly as before, the portion 218C has a molecular editor 220C applied thereto, targeting the variable *Y* such that literals corresponding to the variable *Y*, i.e. literal-encoding sequences containing the variable identifier for *Y* as defined above, have their truth symbols edited to represent true (*Y = T*), thus creating sequences 216A" and 216B", with a further prime added to distinguish from the previous form of these sequences (216A' and 216B').

The portion 218D has molecular editor 220D applied thereto, which corresponds to an opposite assignment of *Y = F*.

Again, the molecular editor 220D may not be required in the present example, as FALSE was the default assignment for the truth symbols of the encoded N-SAT problem 206.

The sequences 216A"-D" are then combined, thus obtaining a pool 222 of potential solution sequences 216A"-D", having short representations as follows:

| 216A" | *NT - S - Y - NT - X -- PT - S - Y - PT - X* |
|-------|---------------------------------------------|
| 216B" | *NT - S - Y - NF - X -- PT - S - Y - PF - X* |
| 216C" | *NF - S - Y - NT - X -- PF - S - Y - PT - X* |
| 216D" | *NF - S - Y - NF - X -- PF - S - Y - PF - X* |

According to the presently illustrated example, the pool 222 may be processed using a molecular cutter 223 (or simply 'cutter 223'), which may employ CRISPR (e.g. CRISPR/Cas9), ZFN, TALEN, or similar techniques.

The cutter 223 may be configured to target motifs/indications that correspond to false-evaluating clauses present in potential-solution sequences 216A"-216D".

In order to further facilitate the action of the cutter 223, the aggregation symbol may be edited according to a truth evaluation of one or more literal-encoding sequences adjacent thereto.

For example, false-evaluating *X* literals (i.e. literals corresponding to the variable *X*) may have their information propagated to the aggregation symbol, as follows (with 'P' added to the reference numeral to indicate propagation having occurred):

| 216A"P | *NT - C - Y - NT - X - PT - S - Y - PT - X* |
|--------|--------------------------------------------|
| 216B"P | *NT - S - Y - NF - X - PT - C - Y - PF - X* |
| 216C"P | *NF - C - Y - NT - X - PF - S - Y - PT - X* |
| 216D"P | *NF - S - Y - NF - X - PF - C - Y - PF - X* |

This propagation may be carried out using a molecular editor 220P similar to those used for molecular editors 220A-D.

Accordingly, the pool 222 may need only be processed using two molecular cutters 223: one to recognize/target and cut *NT - C*, and another to recognize and cut *PF - C*. In molecular representation, these motifs/patterns may be as follows, according to the previously defined encoding scheme:

| *NT - C* | T-T-TGGT-T |
|----------|------------|
| *PF - C* | A-C-TGGT-T |

It can be seen above that the potential-solution sequences that may be cut by such cutters 223 are 216A"P and 216D"P. That is, potential-solution sequences 216A"P and 216D"P may be identified as non-solution sequences, thus allowing for sequences 216B"P and 216C"P to be identified as solution sequences 224.

The solution sequence(s) 224 may be separated from the non-solution sequences by any suitable means. For example, the cutting of non-solution sequences 216A"P and 216D"P may cause a start symbol and a finish symbol and opposite ends of these sequences to be separated. Then, beads may be bound to start symbols and finish symbols, whilst washing away unbound sequences, such that only sequences containing both a start symbol and a finish symbol (i.e. uncut and therefore solution sequences) remain.

Additionally or alternatively, non-solution sequences may be marked (e.g. in the same places that they would otherwise have been cut according to the above described example) in such a way that a replication process is blocked, so that solution sequences can be preferably replicated to create a larger signal in a readout of sequences present in the pool 222.

Other techniques for distinguishing solution sequences 224 from non-solution sequences are possible and may be selected according to the apparatus or system implementing the process 200.

Once identified, the solution sequences may then be provided to a molecular reading means 226, which may use a molecular decoder 228 such as a DNA sequencer.

The molecular reading means 226 may then output a computer-readable representation 230 of the solution sequence(s) 224 and provide this to the electronic computer system 208.

The electronic computer system 208 may then analyze the representation 230 of the solution sequence(s) so as to determine the truth value assignment that led to its (their) creation.

In the present example, it may be determined from the representation 230 of solution sequence 216B"P that the truth value assignment [$X = F$, $Y = T$] is a successful truth value assignment for generating a solution sequence 224 and is thus a solution to the N-SAT problem 206. It may also be determined from the representation 230 of solution sequence 216C"P that the truth value assignment [$X = T$, $Y = F$] is also a solution to the N-SAT problem 206.

The output truth-value assignments 232 may then be collected and provided to the requesting party 202, which may then interpret therefrom a solution 236 to the N-SAT problem 206 and thus a solution 234 to the NP-complete problem 204. According to some examples, the solution truth value assignments 232 may be converted/translated into a solution 234 to the NP-problem 204 by the electronic computer system 208.

In some examples, the cutter 223 may be added to the intermediate pool 219 so as to begin the identification of the solution sequences 224 earlier, i.e. simultaneously with the truth symbol editing process. The same may apply to the propagating molecular editor 220P, in some examples.

According to further examples, the molecular reading means 226 may also be provided with the non-solution sequences 216A"P and 216D"P so that the truth value assignment leading to their creation can be determined. In larger molecular sequences, with a greater number of potentially longer clauses, it may improve efficiency of the process 200 if this information is fed back to the truth symbol editing process such that the proportions 218 may be adjusted accordingly, with a view to increasing a frequency of assigning truth values that are anticipated to lead to solution sequences 224 (or at least not lead to non-solution sequences).

It may not be the case that all non-solutions are separated/distinguished from the solution sequences 224 in the pool 222. Solutions to the N-SAT problem can be efficiently checked by e.g. the electronic computing system 208, thus, non-solution sequences and solution sequences 224 may be read/sequenced by the molecular reading means 226, and sorted accordingly. Thereafter, non-solution sequences may also have their truth value assignments 232 determined and these may be used to feedback information as described above, whilst solution sequences 224 can be translated into solutions 234 to the N-SAT problem 206.

In some examples, it may be the case that the solution sequences 224 correspond to near-solutions rather than perfect solutions, which may be caused by errors accumulated during molecular editing. In such cases, conflict driven clause learning (CDCL) procedures may be employed for error correction, such as those used in standard SAT solvers (SSAT solvers) in electronic computers. Thus, the solution sequences 224 may represent a set of candidate solutions, and these candidate solutions may be used to guide a CDCL solver in a solution search in a way that erroneous truth value assignments can be corrected by the CDCL procedure.

If a candidate solution in the set is close enough to a 'real' solution (having, for example, a substantially minor proportion of variable truth assignments incorrect) then conventional CDCL-based solvers may efficiently recover the real solution from the set. This is due to the incremental nature of the CDCL procedure and the capability of conflict clauses to correct erroneous assignments.

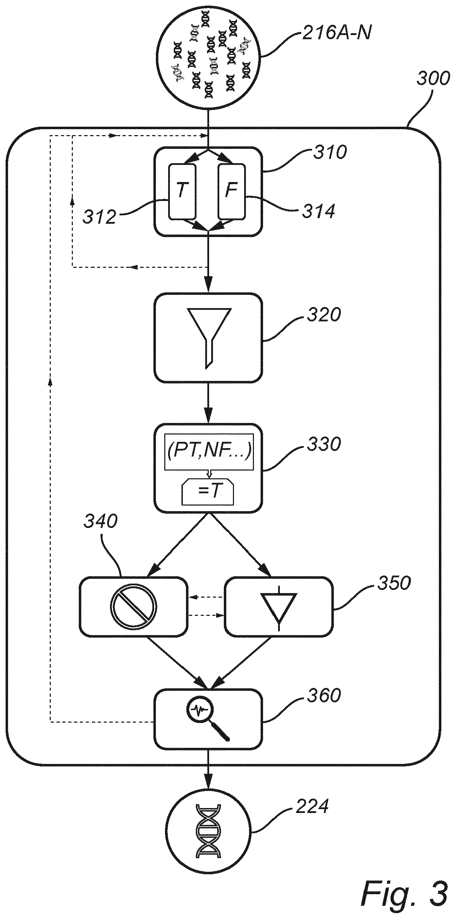

Figure 3 schematically shows an example apparatus 300 for performing at least a portion of the process 200 shown in figure 2, namely the truth value assignment (truth symbol editing) process and the identification of solution sequences 224.

The apparatus 300 may contain a plurality of portions or chambers 310, 320, 330, 340, 350, 360. Different operations may be executed in in each chamber of the apparatus (which may be a micro-fluidic system) with either continuous flow or 'batch volume' flow. Batch volumes may be separated by injected gas bubbles or oil droplets.

Both analytical (molecular sequence reading) and operational (editing) steps may be performed by exploiting immobilized stretches of, e.g., DNA (or PNA), along the path, carrying functionalities as considered herein. Immobilization may be achieved by using thiol end groups to solid gold or silver surfaces, or streptavidin-biotin linkage to silica surface, or other surface binding technology, including lipid surface and lipid vesicle technology, for example. Lipid vesicle technology may be preferred since water-soluble and lipid-soluble components may be kept apart from each other.

Technology for opening lipid vesicles to release contained DNA or chemical reagents using oscillating magnetic fields may be used for mixing reagents. 'Magnetosomes' or DNA (or other molecular reagents) attached to magnetic particles may also be used to handle (separate) reaction components.

The chambers 310, 320, 330, 340, 350, 360, may be separated by films or membranes, in a context where the apparatus 300 may be a lipid membrane system or a similar hydrophobic environment system. Considering DNA, for example, membranes may be used as a platform in molecular computing contexts as the molecular sequences may be immobilized on a lipid double layer, e.g. via an anchor that could have photo-physical redox properties (for cleavage) but may also be contained aqueous interstitial between the lipid bilayers, for example in lamellar liquid crystals, or in 'free' solution inside lipid vesicles (sometimes referred to as 'liposomes'). The membrane may also be a place where some other reagent such as a specific intercalator is deposited before reaction with molecular sequence, for example.

According to the illustrated example, the apparatus 300 may be provided with replicas sequences (replicas) 216A-N of a molecular sequence 216 encoding an N-SAT problem.

The replicas 216A-N may be split into two portions of equal or differing proportions (e.g. half, 30/70%, 10/90% and so on) where each portion is directed into a respective part 312, 314 of the first chamber 310.

A true-assigning part 312 of the first chamber may be used as a vessel in which the editing of truth symbols to represent true is performed. Similarly, a false-assigning part 314 of the first chamber may be used as a vessel in which the editing of truth symbols to represent false is performed. This editing may be performed in parallel for a plurality of different variables (e.g. $X_1, X_2 ..., X_N$) or the editing may be performed for one variable at a time, wherein the edited sequences may be recombined and then returned back into the chamber 310 for repeat processing (as indicated by the dotted line).

The sequences may then be directed to an optional second chamber 320, wherein the sequences are purified in that proteins, guide RNAs etc. are removed or destroyed, leaving only the sequences desired for further processing.

The sequences may then be directed to a third chamber 330, wherein propagation steps may be performed to propagate information, e.g. between literals within clauses (as shown in the above examples). The propagation steps may include molecular editing of aggregation and/or evaluation symbols, and this editing may be performed using a same means for molecular editing. Thus, such editing of aggregation and/or evaluation symbols may advantageously performed in bulk to all sequences.

After the third chamber 330, the sequences may then be provided to a fourth chamber 340, or a fifth chamber 350, or both (in either order).

In the fourth chamber 340, molecular sequences corresponding to determined non-solutions may be cut or marked, as described above.

In the fifth chamber 350, molecular sequences that have not been cut or marked, or that have otherwise been identified as being solution sequences may be amplified, e.g. using PCR techniques.

The resulting sequences from the processing in the fourth chamber 340 and the fifth chamber 350 may then be provided to a sixth chamber 360, wherein sequences can be analyzed (read, interrogated, etc.).

As previously described, both non-solution sequences and solution sequences may be provided to the sixth chamber 360. For example, solution-sequences sequences may be confirmed/refined in the sixth chamber 360 and output as solution sequences 224.

Non-solution sequences may be confirmed and interrogated to determine the truth value assignments that generated them, and this information may be fed back into the truth value assignment process in the first chamber 310, as indicated by the dotted line. The proportions directed into the true-assigning chamber 312 and the false-assigning chamber 314 may thus be adjusted on the basis of this fed back information.

In some examples, replicas of a molecular sequence encoding one or more further N-SAT problems may be combined with the replicas 216A-N, and these replicas may be processed by the apparatus 300 entirely or substantially in parallel with the replicas 216A-N. For example, various N-SAT problems may share variables, in which case the truth assignment process in chamber 310 may be carried out in parallel for these shared variables.

As the molecular editing and cutting processes carried out in the processes are not problem-specific, these multiple problems may advantageously solved at a same time in parallel. Thus, the throughput of the apparatus can be expanded for solving multiple N-SAT problems at a same time, for a plurality of molecular sequence inputs encoding a respective plurality of N-SAT problems.

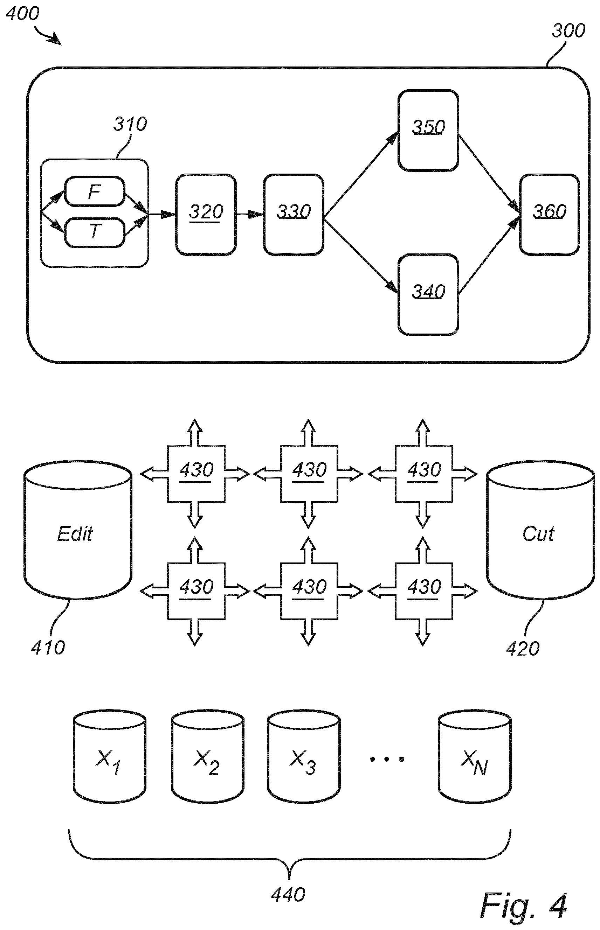

Figure 4 schematically shows an example molecular computing system 400 comprising the apparatus 300 shown in figure 3.

The molecular computing system 400 may further comprise vessels for storing molecular editing means 410 and molecular cutting means 420. For example, a first vessel may store or otherwise source CRISPR cutting enzymes, and a second vessel may store or otherwise source CRISPR editing enzymes. Any other molecular cutting or editing means may be used, such as those other than CRISPR described herein.

The molecular computing system may further comprise variable-specific guide molecules 440, such as specific CRISPR/RNA guides, contained in respective vessels. For N variables, there may be 2N variable-specific guide molecules 440 - one each for editing truth symbols to represent true and false respectively.

As shown in figure 4, the molecular computing system 400 may further comprise connective means 430 for connecting the various vessels with the various chambers 310, 320, 330, 340, 350, 360 of the apparatus 300. For example, the vessels containing variable-specific guide molecules 440 may be connected via connective means 430 to chamber 310 (where variable truth assignment may be performed), the vessel containing cutting means 420 may be connected via connective means 430 to chamber 340 (where non-solution sequences may be cut), and so on, according to the required connections.

The connective means 430 may, in some examples, be a series of interconnected valves and pumps (e.g. configured for liquid and/or gas pumping), where the valves may be multi-way pumps (e.g. 100-way valves or more or fewer). The chambers 310, 320, 330, 340, 350, 360 and vessels may be connected according to need, or they may all be connected via the connective means 430, and the connective means 430 may then be operated automatically or manually (e.g. via control of pumps and/or valves and the like) according to need.

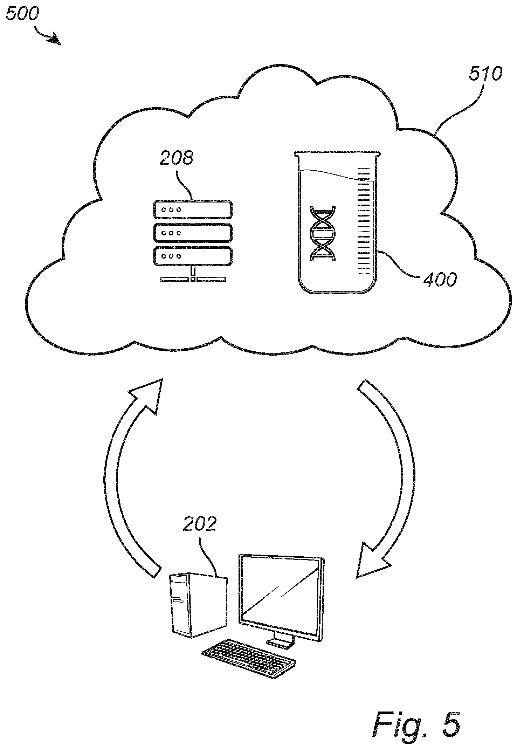

Figure 5 schematically shows a system 500 comprising a cloud computing system 510 and a requesting party 202. The cloud computing system 510 may comprise the molecular computing system 400 shown in figure 4 and an electronic computing system 208 such as that discussed in respect of figure 2.

The electronic computing system 208 may be one or more servers that are in data communication with the molecular computing system 400 and the requestion party 202, such that the electronic computing system 208 can act as an intermediary between the requesting party 202 and the molecular computing system 400. The electronic computing system 208 may be locally or remotely situated with regard to the requesting party 202 and/or the molecular computing system 400.

The electronic computing system 208 may further comprise a control system configured to control operations of the molecular computing system 400, such that the molecular computing system 400 can be operated entirely or substantially autonomously.

The requesting party 208 may request a solution to an N-SAT problem or a NP-complete problem from which the N-SAT problem is derivable. This request may be directed to an internet address or URL corresponding to the electronic computer system 208, which may process the request to determine the N-SAT problem in need of solving.

The electronic computer system 208 may then control or initiate a molecular computing process in the molecular computing system 400, as described above, so as to obtain one or more solutions to the N-SAT problem.

The electronic computer system 208 may then provide, for example via the internet, the one or more solutions to the N-SAT problem to the requesting party 202.

All of the features disclosed herein and/or all of the steps of any method or process disclosed herein, may be combined in any combination, except combinations where at most some of such features and/or steps are mutually exclusive or explicitly stated to be ordered.

Although preferred embodiments have been shown and described, it will be appreciated by those skilled in the art that various changes and modifications might be made without departing from the scope of the disclosure, as defined in the appended claims and as described above.

## EMBODIMENTS

The present disclosure is further explained in view of the following numbered embodiments.

1. A method for operating a molecular computer to solve an NP-complete mathematical problem, comprising:

obtaining a molecular sequence encoding an N-SAT problem having a plurality of clauses formed from a plurality of literals in conjunctive normal form, wherein:

the N-SAT problem is encoded into the molecular sequence as a series of symbols, each symbol comprising at least one unit of the molecular sequence; and

each literal of each clause of the N-SAT problem is encoded as a literal-encoding sequence such that, for each literal, the literal-encoding sequence comprises:

a variable symbol identifying a variable of the N-SAT problem;

a polarity symbol representing a polarity of the literal; and

a truth symbol for representing an assigned truth value;

obtaining replicas of the molecular sequence;

for each pair of replicas, editing the literal-encoding sequences having a variable symbol identifying a particular variable of the N-SAT problem such that, for one replica of the pair, the truth symbol is assigned a truth value representing true and, for the other replica of the pair, the truth symbol is assigned a truth value representing false;

obtaining, from said editing, a pool of potential-solution sequences, each potential-solution sequence encoding a potential solution to the N-SAT problem;

identifying, from the pool of potential-solution sequences, a solution sequence, based on a determination that each encoded clause of a potential-solution sequence contains at least one true-evaluating literal-encoding sequence, the solution sequence encoding a solution to the N-SAT problem;

wherein the N-SAT problem corresponds to the NP-complete mathematical problem such that the solution to the N-SAT problem can be decoded from the solution sequence and used for solving the NP-complete mathematical problem.

2. The method according to embodiment 1, wherein:
the molecular sequence is selected from the group consisting of a DNA sequence, an RNA sequence, and a PNA sequence.

3. The method according to embodiment 2, wherein;
editing the truth symbol is performed using CRISPR or polymerase chain reaction (PCR) techniques, carrying out DNA, RNA, or PNA targeted site-directed mutagenesis.

4. The method according to any of embodiments 1 to 3, wherein:

the variable symbol and the polarity symbol are collectively encoded in a literal-identifier symbol, such that literals corresponding to a same variable but having different polarities are represented by different literal-identifier symbols;

assigning a truth value representing true comprises editing the truth symbol to represent true;

assigning a truth value representing false comprises editing the truth symbol to represent false; and

a true-evaluating literal-encoding sequence comprises a literal-identifier corresponding to a positive literal and a truth symbol representing true, or a literal-identifier corresponding to a negative literal and a truth symbol representing false.

5. The method according to any of embodiments 1 to 3, wherein:

the polarity symbol and the truth symbol are collectively encoded in a consolidated symbol, such that the consolidated symbol represents a consolidated value of the polarity of the literal and the assigned truth value for the literal,

encoding the N-SAT problem into the molecular sequence comprises encoding a polarity of literals into the consolidated symbol such that a positive literal is assigned a consolidated symbol representing true, and a negative literal is assigned a consolidated symbol representing false;

assigning a truth value representing true comprises maintaining the consolidated symbol;

assigning a truth value representing false comprises reversing the consolidated symbol; and

a true-evaluating literal-encoding sequence comprises a consolidated symbol representing true.

6. The method according to any of embodiments 1 to 3, wherein:

the variable symbol, the polarity symbol, and the truth symbol are each separately encoded;

assigning a truth value representing true comprises editing the truth symbol to represent true;

assigning a truth value representing false comprises editing the truth symbol to represent false; and

a true-evaluating literal-encoding sequence comprises a truth symbol representing true and a positive polarity symbol, or a truth symbol representing false and a negative polarity symbol.

7. The method according to any preceding embodiment, wherein:

the molecular sequence further comprises a start symbol at an end of the molecular sequence, and a finish symbol at the other end of the molecular sequence; and

identifying the solution sequence comprises:

identifying non-solution sequences based on a determination that a clause in a potential-solution sequence contains no true-evaluating literal-encoding sequences;

cutting non-solution sequences to thereby separate the start symbol from the finish symbol of the non-solution sequence; and

after said cutting, identifying solution-sequences as molecular sequences having a start symbol and a finish symbol.

8. The method according to embodiment 7, wherein:

cutting non-solution sequences is performed using a molecular cutter based on CRISPR techniques; and

the molecular cutter targets false-evaluating literal-encoding sequences.

9. The method according to any preceding embodiment, wherein:
identifying the solution sequence comprises:

identifying non-solution sequences based on a determination that a clause in a potential-solution sequence contains no true-evaluating literal-encoding sequences;

marking non-solution sequences with a molecular marker; and

after said marking, identifying solution-sequences as molecular sequences not comprising the molecular marker.

10. The method according to embodiment 9, wherein:
the molecular marker blocks operation of a replication process, thereby enabling preferential replication of solution sequences.

11. The method according to embodiment 9, wherein:

the molecular marker is an oligo-coupled particle; and

identifying solution-sequences as molecular sequences not comprising the molecular marker comprises separating non-solution sequences from solution sequences using the oligo-coupled particle.

12. The method according to any preceding embodiment, wherein:

the molecular sequence further comprises an evaluation symbol for a clause, representing a truth evaluation of the clause; and

identifying the solution sequence comprises;

editing the evaluation symbol of the clause to represent an aggregated truth evaluation for the plurality of literal-encoding sequences comprised in the clause, wherein:

if at least one literal-encoding sequence is true-evaluating, the evaluation symbol is edited to represent true; and/or

if the plurality of literal-encoding sequences are false-evaluating, the evaluation symbol is edited to represent false; and

identifying the solution sequence based on a determination that a potential-solution sequence does not comprise an evaluation symbol representing false.

13. The method according to any preceding embodiment, wherein:

the molecular sequence further comprises an aggregation symbol for a clause, representing an aggregated truth evaluation for one or more literal-encoding sequences comprised in the clause; and

identifying the solution sequence comprises;

editing the aggregation symbol of a clause in a potential-solution sequence to represent an aggregated truth value for the literal-encoding sequences, wherein:

if at least one literal-encoding sequence is true-evaluating, the aggregation symbol is edited to represent true; or

if all of the literal-encoding sequences are false-evaluating, the aggregation symbol is edited to represent false; and

identifying the solution sequence based at least part on an aggregation symbol in a potential-solution sequence representing true.

14. The method according to any preceding embodiment, wherein:
the molecular sequence further comprises at least one of:

an OR symbol for representing logical disjunction; and

an AND symbol for representing logical conjunction.

15. The method according to any preceding embodiment, wherein:
editing of the literal-encoding sequences and identifying the solution sequence are performed simultaneously.

16. The method according to any preceding embodiment, further comprising:

obtaining a second molecular sequence encoding a second N-SAT problem, wherein the second N-SAT problem corresponds to a second NP-complete mathematical problem;

obtaining second replicas of the second molecular sequence;

for each pair of second replicas, editing the literal-encoding sequences having a variable symbol identifying a particular variable of the second N-SAT problem such that, for one replica of the pair, the truth symbol is assigned a truth value representing true and, for the other replica of the pair, the truth symbol is assigned a truth value representing false; and

obtaining, from said editing, a second pool of potential-solution sequences, each potential-solution sequence in the second pool encoding a potential solution to the second N-SAT problem;

combining the second pool of potential-solution sequences with the pool of potential-solution sequences, to obtain a combined pool; and

identifying, from the combined pool, a second solution sequence encoding a solution to the second N-SAT problem, based on a determination that each encoded clause of a potential-solution sequence from the second pool contains at least one true-evaluating literal-encoding sequence.

17. The method according to embodiment 16, wherein:
one or more variables of the second N-SAT problem are shared with the N-SAT problem.

18. The method according to any preceding embodiment, further comprising:
during a feedback process of editing literal-encoding sequences and identifying solution sequences:

identifying a non-solution sequence encoding a non-solution to the N-SAT problem;

determining a truth value assignment that generated the non-solution sequence, the truth value assignment being one or more assigned truth values for particular variables of the N-SAT problem; and

in response to determining the truth value assignment that generated the non-solution sequence, reducing a frequency of use of the truth value assignment when editing literal-encoding sequences.

19. The method according to any preceding embodiment, further comprising:

translating the N-SAT problem into the molecular sequence; and

translating the solution sequence into the solution to the N-SAT problem.

20. An apparatus comprising means for performing the method of any of embodiments 1 to 19.

21. A cloud-computing system comprising the apparatus of embodiment 20.

**Claims**

1. A method for operating a molecular computer to solve an NP-complete mathematical problem, comprising:

obtaining a molecular sequence encoding an N-SAT problem having a plurality of clauses formed from a plurality of literals in conjunctive normal form, wherein:

the N-SAT problem is encoded into the molecular sequence as a series of symbols, each symbol comprising at least one unit of the molecular sequence; and
each literal of each clause of the N-SAT problem is encoded as a literal-encoding sequence such that, for each literal, the literal-encoding sequence comprises:

a variable symbol identifying a variable of the N-SAT problem;
a polarity symbol representing a polarity of the literal; and
a truth symbol for representing an assigned truth value;

obtaining replicas of the molecular sequence;
for each pair of replicas, editing the literal-encoding sequences having a variable symbol identifying a particular variable of the N-SAT problem such that, for one replica of the pair, the truth symbol is assigned a truth value representing true and, for the other replica of the pair, the truth symbol is assigned a truth value representing false;
obtaining, from said editing, a pool of potential-solution sequences, each potential-solution sequence encoding a potential solution to the N-SAT problem;
identifying, from the pool of potential-solution sequences, a solution sequence, based on a determination that each encoded clause of a potential-solution sequence contains at least one true-evaluating literal-encoding sequence, the solution sequence encoding a solution to the N-SAT problem;
wherein the N-SAT problem corresponds to the NP-complete mathematical problem such that the solution to the N-SAT problem can be decoded from the solution sequence and used for solving the NP-complete mathematical problem.

2. The method according to claim 1, wherein:
the molecular sequence is selected from the group consisting of a DNA sequence, an RNA sequence, and a PNA sequence.

3. The method according to claim 1 or claim 2, wherein:

the variable symbol and the polarity symbol are collectively encoded in a literal-identifier symbol, such that literals corresponding to a same variable but having different polarities are represented by different literal-identifier symbols;
assigning a truth value representing true comprises editing the truth symbol to represent true;
assigning a truth value representing false comprises editing the truth symbol to represent false; and
a true-evaluating literal-encoding sequence comprises a literal-identifier corresponding to a positive literal and a truth symbol representing true, or a literal-identifier corresponding to a negative literal and a truth symbol representing false.

4. The method according to claim 1 or claim 2, wherein:

the polarity symbol and the truth symbol are collectively encoded in a consolidated symbol, such that the consolidated symbol represents a consolidated value of the polarity of the literal and the assigned truth value for the literal,
encoding the N-SAT problem into the molecular sequence comprises encoding a polarity of literals into the consolidated symbol such that a positive literal is assigned a consolidated symbol representing true, and a negative literal is assigned a consolidated symbol representing false;
assigning a truth value representing true comprises maintaining the consolidated symbol;
assigning a truth value representing false comprises reversing the consolidated symbol; and
a true-evaluating literal-encoding sequence comprises a consolidated symbol representing true.

5. The method according to claim 1 or claim 2, wherein:

the variable symbol, the polarity symbol, and the truth symbol are each separately encoded;
assigning a truth value representing true comprises editing the truth symbol to represent true;
assigning a truth value representing false comprises editing the truth symbol to represent false; and
a true-evaluating literal-encoding sequence comprises a truth symbol representing true and a positive polarity symbol, or a truth symbol representing false and a negative polarity symbol.

6. The method according to any preceding claim, wherein:

the molecular sequence further comprises a start symbol at an end of the molecular sequence, and a finish symbol at the other end of the molecular sequence; and
identifying the solution sequence comprises:

identifying non-solution sequences based on a determination that a clause in a potential-solution sequence contains no true-evaluating literal-encoding sequences;
cutting non-solution sequences to thereby separate the start symbol from the finish symbol of the non-solution sequence; and
after said cutting, identifying solution-sequences as molecular sequences having a start symbol and a finish symbol.

7. The method according to any preceding claim, wherein:
identifying the solution sequence comprises:

identifying non-solution sequences based on a determination that a clause in a potential-solution sequence contains no true-evaluating literal-encoding sequences;
marking non-solution sequences with a molecular marker; and
after said marking, identifying solution-sequences as molecular sequences not comprising the molecular marker.

8. The method according to any preceding claim, wherein:

the molecular sequence further comprises an evaluation symbol for a clause, representing a truth evaluation of the clause; and
identifying the solution sequence comprises;

editing the evaluation symbol of the clause to represent an aggregated truth evaluation for the plurality of literal-encoding sequences comprised in the clause, wherein:

if at least one literal-encoding sequence is true-evaluating, the evaluation symbol is edited to represent true; and/or
if the plurality of literal-encoding sequences are false-evaluating, the evaluation symbol is edited to represent false; and

identifying the solution sequence based on a determination that a potential-solution sequence does not comprise an evaluation symbol representing false.

9. The method according to any preceding claim, wherein:

the molecular sequence further comprises an aggregation symbol for a clause, representing an aggregated truth evaluation for one or more literal-encoding sequences comprised in the clause; and
identifying the solution sequence comprises;

editing the aggregation symbol of a clause in a potential-solution sequence to represent an aggregated truth value for the literal-encoding sequences, wherein:

if at least one literal-encoding sequence is true-evaluating, the aggregation symbol is edited to represent true; or
if all of the literal-encoding sequences are false-evaluating, the aggregation symbol is edited to represent false; and

identifying the solution sequence based at least part on an aggregation symbol in a potential-solution sequence representing true.

10. The method according to any preceding claim, wherein:
editing of the literal-encoding sequences and identifying the solution sequence are performed simultaneously.

11. The method according to any preceding claim, further comprising:

obtaining a second molecular sequence encoding a second N-SAT problem, wherein the second N-SAT problem corresponds to a second NP-complete mathematical problem;
obtaining second replicas of the second molecular sequence;
for each pair of second replicas, editing the literal-encoding sequences having a variable symbol identifying a particular variable of the second N-SAT problem such that, for one replica of the pair, the truth symbol is assigned a truth value representing true and, for the other replica of the pair, the truth symbol is assigned a truth value representing false; and
obtaining, from said editing, a second pool of potential-solution sequences, each potential-solution sequence in the second pool encoding a potential solution to the second N-SAT problem;
combining the second pool of potential-solution sequences with the pool of potential-solution sequences, to obtain a combined pool; and
identifying, from the combined pool, a second solution sequence encoding a solution to the second N-SAT problem, based on a determination that each encoded clause of a potential-solution sequence from the second pool contains at least one true-evaluating literal-encoding sequence.

12. The method according to claim 11, wherein:
one or more variables of the second N-SAT problem are shared with the N-SAT problem.

13. The method according to any preceding claim, further comprising:
during a feedback process of editing literal-encoding sequences and identifying solution sequences:

identifying a non-solution sequence encoding a non-solution to the N-SAT problem;
determining a truth value assignment that generated the non-solution sequence, the truth value assignment being one or more assigned truth values for particular variables of the N-SAT problem; and
in response to determining the truth value assignment that generated the non-solution sequence, reducing a frequency of use of the truth value assignment when editing literal-encoding sequences.

14. An apparatus comprising means for performing the method of any of claims 1 to 13.

15. A cloud-computing system comprising the apparatus of claim 14.

Obtaining a molecular sequence encoding an N-SAT problem having a plurality of clauses formed from a plurality of literals in conjuctive normal form, wherein the N-SAT problem is encoded into the molecular sequence as a series of symbols, each symbol comprising at least one unit of the molecular sequence, and each literal of each clause of the N-SAT problem is encoded as a literal-encoding sequence such that, for each literal, the literal-encoding sequence comprises a variable symbol identifying a variable of the N-SAT problem, a polarity symbol representing a polarity of the literal, and a truth symbol for representing an assigned truth value,

— 110

Obtaining replicas of the molecular sequence,

— 120

For each pair of replicas, editing the literal-encoding sequences having a variable symbol identifying a particular variable of the N-SAT problem such that, for one replica of the pair, the truth symbol is assigned a truth value representing true and, for the other replica of the pair, the truth symbol is assigned a truth value representing false,

— 130

Obtaining, from said editing, a pool of potential-solution sequences, each potential-solution sequence encoding a potential solution to the N-SAT problem,

— 140

Identifying, from the pool of potential-solution sequences, a solution sequence, based on a determination that each encoded clause of the potential-solution sequence contains at least one true-evaluating literal-encoding sequence, the solution sequence encoding a solution to the NP-complete mathematical problem such that the solution to the N-SAT problem can be decoded from the solution sequence and used for solving the NP-complete mathematical problem.

— 150

*Fig. 1*

Fig. 2

Fig. 3

Fig. 4

*Fig. 5*

Europäisches
Patentamt

European
Patent Office

Office européen
des brevets

# EUROPEAN SEARCH REPORT

Application Number

EP 21 21 8077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CLIFFORD R JOHNSON ED  – MAX H GARZON ET AL: "Modeling Non-specific Binding in Gel-Based DNA Computers", 4 June 2007 (2007-06-04), DNA COMPUTING; [LECTURE NOTES IN COMPUTER SCIENCE], SPRINGER BERLIN HEIDELBERG, BERLIN, HEIDELBERG, PAGE(S) 170 – 181, XP019086633, ISBN: 978-3-540-77961-2 * abstract * * section 1-3 * | 1-15 | INV. G06N3/12 G06N5/00 |
| A | CURRIN ANDREW ET AL:  "Computing exponentially faster: implementing a non-deterministic universal Turing machine using DNA", J. R. SOC. INTERFACE, vol. 14, 1 March 2017 (2017-03-01), XP055934596, Retrieved from the Internet: URL:https://www.ncbi.nlm.nih.gov/pmc/articles/PMC5378132/pdf/rsif20160990.pdf> * abstract * * page 8 – page 9 * | 1-15 | TECHNICAL FIELDS SEARCHED (IPC)  G06N |

The present search report has been drawn up for all claims

| Place of search | Date of completion of the search | Examiner |
|---|---|---|
| The Hague | 23 June 2022 | Papadakis, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)